# EUROPEAN PATENT APPLICATION

(11) **EP 1 492 377 A2**
(43) Date of publication of application: **29.12.2004**
(21) Application number: 04101707.0
(22) Date of filing: 23.04.2004
(51) Int. Cl.: H04Q 7/38

(54) **Communication system communication unit and method for performing encrypted communication**

(30) Priority: 09.10.2003 GB 0323608; 27.06.2003 US 483504 P
(71) Applicant: Motorola Inc., Schaumburg, IL 60196 (US)
(72) Inventor: Johur, Jason J, Basingstoke, Hampshire RG22 4PD (GB); Buchwinkler, Helmut, 130 Berlin (DE); Chater-Lea, David, Basingstoke, Hampshire RG22 4PD (GB); Sowa, Hans C, Schaumburg, Illinois 60196 (US)
(74) Representative: McCormack, Derek James

(57) **Abstract**

A method (300) for performing encrypted communication in a wireless communication system having a centralised network operably coupled to a serving communication unit that wirelessly communicates with a plurality of remote communication units. The method comprises the steps of transmitting an encrypted message, preferably a registration message, from one of the plurality of remote communication units to the serving communication unit where the serving communication unit does not contain a key to decrypt the encrypted message. The serving communication unit (122) stores (335) the encrypted message and retrieves (330) a key from the centralised network to facilitate decryption of the encrypted message. A communication system and associated communication units are also described.

In storing encrypted messages such as registration messages, coupled with a key retrieval mechanism, mobile subscriber units are able to perform encrypted registration without either the subscriber unit or the system knowing where or when the encrypted registration request will be made.

## Description

### Field of the Invention

This invention relates to digital mobile radio communication systems employing air-interface encryption. The invention is applicable to, but not limited to, providing a mechanism that enables encrypted registrations using individual cipher keys in a digital communication system.

### Background of the Invention

Wireless communication systems, for example cellular telephony or private mobile radio communication systems, typically provide for radio telecommunication links to be arranged between a plurality of base transceiver stations (BTSs) and a plurality of subscriber units, often termed mobile stations (MSs). The term mobile station generally includes both hand-portable and vehicular mounted radio units.

Wireless communication systems are distinguished over fixed communication systems, such as the public switched telephone networks (PSTN), principally in that mobile stations move between service providers (and/or different BTS) and in doing so encounter varying radio propagation environments.

In a wireless communication system, each BTS has associated with it a particular geographical coverage area (or cell). The coverage area defines a particular range that the BTS can maintain acceptable communications with MSs operating in its serving cell. Often these cells combine to produce an expanded system coverage area. Furthermore, cells are often grouped into location areas for the purposes of tracking a MS within the coverage area whilst minimising location-updating signalling.

The communication link from a BTS to a MS is generally referred to as a downlink channel. Conversely, the communication link from a MS to a BTS is generally referred to as an uplink channel.

Systems such as TETRA are designed mainly for the public safety market and as such represent mission critical communications. One of the main features of these systems is the air-interface (AI) security, which comprises AI encryption and authentication.

AI encryption requires the use of individual and/or shared AI cipher keys. A cipher key is generally defined as information, typically a sequence of random or pseudorandom binary digits, used initially to set up and periodically change the operations performed in crypto-equipment. Such keys are used to encrypt or decrypt electronic signals, or to determine electronic counter-measure patterns, for example frequency hopping or spread spectrum, or for producing other keys. In the art, the term 'key' is often used to encompass the terms 'variable key', 'key(ing) variable' and 'crypto variable'. Notably, cipher keys require frequent rekeying, i.e. the frequent changing of the encryption 'key'.

The TETRA standard also supports various protocol messages for the exchange and activation of AI encryption keys between a Switching and Management Infrastructure (SwMI) and MSs. AI authentication is the signalling process that is used with the encryption technology to ensure that the two parties to the encrypted communication are authorised. TETRA supports authentication of both the SwMI and the MS equipment. One of the outputs of this process is an AI cipher key that is derived (i.e. a derived cipher key (DCK)) and which may be used in AI encryption.

Furthermore, the TETRA standard specifies a mechanism that allows an MS to indicate to a serving cell the new cell to which it will re-select in a hand-over operation. Such an indication allows the SwMI to ensure that a corresponding DCK is made available to the new cell before the MS arrives at the new cell and attempts an encrypted "roaming" registration.

However, in the context of a 'power-on' registration, the inventors of the present invention have recognised that the above mechanism fails. Typically, an MS will have no idea when, or in which cells, it will be switched on and therefore when and where the provision of encrypted 'power-on' registration will be needed. Furthermore, information and attributes specifically related to MSs are normally stored and managed by the Central Networking Equipment (CNE), which excludes the BTS with which the MS will attempt to perform the encrypted 'power-on' registration.

In effect, the known mechanism only works in situations where the MS continues to be operational and/or when the new cell to be entered is known to the MS. Also, the known mechanism only works when the MS is able to identify and indicate the new cell prior to radio link failure on the serving cell. Although measures are provided to prevent problems with radio link failures, radio communication systems do suffer from noise and interference, which can prevent the MS transmitting information to, or receiving information from, the SwMI.

In addition, the MS requires a finite period of time for it to establish which of the neighbouring cells it would select if cell re-selection were required. In some instances, where the MS is unable to determine the appropriate new cell, for example due to rapid changes in mobility, the MS is unable to indicate to the serving cell the new cell to which it will ultimately re-select.

From this brief analysis, it is clear that systems that require the MS to transmit an indication of the new cell, in order for the infrastructure to forward individual cipher key material for use with encrypted registrations, are inherently unreliable.

In addition to the unreliable mechanism mentioned previously, existing implementations have also considered distributing all individual cipher key material to all BTS. The main drawback of this approach is the amount of information that has to be distributed, maintained and synchronised across all the associated devices of the system. Thus, this architecture does not scale for truly nationwide networks, particularly ones with a large user base and imposes a significant burden on key management.

Also, it is known that some systems use encryption technology with a single shared key that is known to all MS and all BTS. Clearly, the primary drawback of this approach is the reduced security level that it provides.

Thus, there exists a need to provide a communication system, communication unit and method for performing encrypted communication wherein the abovementioned disadvantages may be alleviated.

### Statement of Invention

In accordance with a first aspect of the present invention there is provided a method for performing encrypted communication in a wireless communication system. The wireless communication system comprises a centralised network operably coupled to a serving communication unit, such as a BTS, that wirelessly communicates with a plurality of remote communication units. The method comprises the steps of transmitting an encrypted message or encrypted message fragments from one of the plurality of remote communication units to the serving communication unit when the serving communication unit does not contain a key to decrypt the encrypted message or encrypted message fragments.

The method further comprises the step of storing the encrypted message or encrypted message fragments at the serving communication unit; retrieving, by the serving communication unit, a key from the centralised network; and decrypting the encrypted message or encrypted message fragments by the serving communication unit upon receipt of a key.

In accordance with a second aspect of the present invention there is provided a wireless serving communication unit, such as a BTS. The wireless serving communication unit comprises a receiver operably coupled to a storage element and a processor. The storage element stores an encrypted message or encrypted message fragments received from a wirelessly served communication unit (such as a subscriber radio) when the BTS does not contain a corresponding key, and the processor retrieves a key from a remote device (such as a centralised key repository) to enable subsequent decryption of the encrypted message or encrypted message fragments.

In accordance with a third aspect of the present invention there is provided a communication system.
The communication system comprises a centralised network operably coupled to a serving communication unit that wirelessly communicates with a plurality of remote communication units. The centralised network comprises a cipher key repository storing a plurality of cipher keys to support encrypted communication in the communication system. The serving communication unit is configured to store an encrypted message or encrypted message fragments received from one or more of the plurality of remote communication units when the serving communication unit does not have a key to decrypt the message. The serving communication unit retrieves the key from the cipher key repository to facilitate subsequent decryption of the encrypted message or encrypted message fragments.

Preferably, the encrypted message is an encrypted registration message, for example, corresponding to a power-on registration message, a roaming registration message or a periodic registration message. In this regard, the storing of encrypted messages, such as registration messages, coupled with a key retrieval mechanism, enables mobile subscriber units to perform encrypted registration without either the subscriber unit or the system knowing when, or where, the encrypted registration request will be made.

Furthermore, once the key has been retrieved from, say, a cipher key repository, the wireless serving communication unit is able to process and reconstruct the originally received encrypted message.

Further aspects of the present invention are as defined in other independent and dependent Claims.

### Brief Description of the Drawings

Exemplary embodiments of the present invention will now be described, with reference to the accompanying drawings, in which:
FIG. 1 illustrates a block diagram of a radio communication system that can be adapted to support the various inventive concepts of a preferred embodiment of the present invention;
FIG. 2 illustrates a block diagram of a radio communication unit, such as a BTS, that can be adapted to support the various inventive concepts of a preferred embodiment of the present invention;
FIG. 3 illustrates a flowchart of the system behaviour to support encrypted registration in accordance with a preferred embodiment of the present invention; and
FIG. 4 illustrates a further flowchart of the system behaviour to support encrypted registration in accordance with a preferred embodiment of the present invention.

### Description of Preferred Embodiments

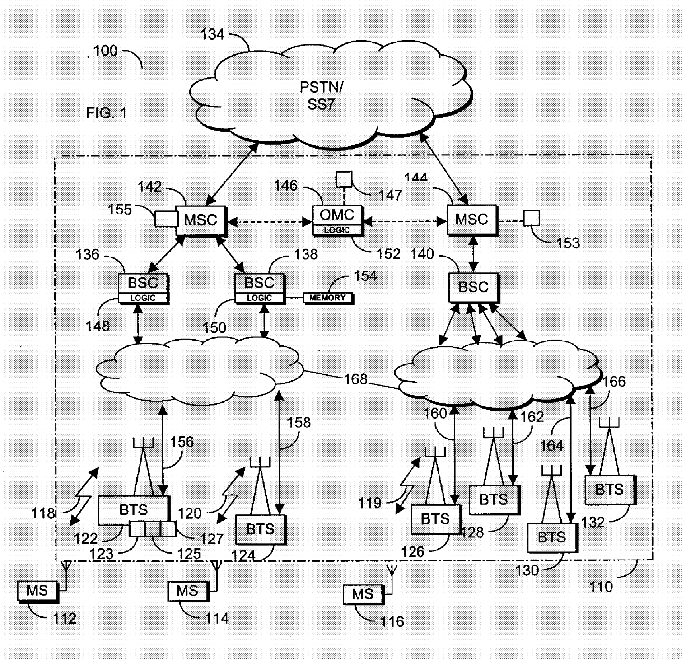

Referring first to FIG. 1, a radio communication system 100, supporting a TErrestrial Trunked RAdio (TETRA) air-interface is shown in outline, in accordance with a preferred embodiment of the invention. The European Telecommunications Standards Institute (ETSI) has defined the TETRA air-interface. Generally, the air-interface protocol is administered from base transceiver stations (BTSs) that are geographically spaced apart - one BTS supporting a cell (or, for example, sectors of a cell).

A plurality of subscriber units, such as a mixture of MSs 112-116 and fixed terminals (not shown), communicate over the selected air-interface 118-120 with a plurality of BTSs 122-132. A limited number of MSs 112-116 and BTSs 122-132 are shown for clarity purposes only.

The system infrastructure in a TETRA system is generally referred to as a Switching and Management Infrastructure (SwMI) 110, which substantially contains all of the system elements apart from the MSs. Centralised network equipment (CNE) is typically referred to as the non-wireless communication entities within the SwMI, i.e. comprising all entities apart from the BTSs. The BTSs 122-132 may be connected to a conventional public-switched telephone network (PSTN) 134 through base station controllers (BSCs) 136-140 and mobile switching centres (MSCs) 142-144.

Each BTS 122-132 is principally designed to serve its primary cell, with each BTS 122-132 containing one or more transceivers. The BTSs 122-132 communicate 156-166 with the rest of the trunking system infrastructure via a frame relay interface 168.

Each BSC 136-140 may control one or more BTSs 122-132, with BSCs 136-140 generally interconnected through MSCs 142-144. Each BSC 136-140 is therefore able to communicate with one another, if desired, to pass system administration information therebetween, with BSCs 136-140 responsible for establishing and maintaining control channel and traffic channels to serviceable MSs 112-116 affiliated therewith. The interconnection of BSCs 136-140 therefore allows the trunked radio communication system to support handover of the MSs 112-116 between cells.

Each MSC 142-144 provides a gateway to the PSTN 134, with MSCs 142-144 interconnected through an operations and management centre (OMC) 146 that administers general control of the trunked radio system 100, as will be understood by those skilled in the art. The various system elements, such as BSCs 136-138 and OMC 146, will include control logic 148-152, with the various system elements usually having associated memory (shown only in relation to memory element 154 of BSC 138 for the sake of clarity). The memory typically stores historically compiled operational data as well as in-call data, system information and control algorithms.

In addition to administering general control of the trunked radio system 100, in accordance with the preferred embodiment of the invention, the OMC 146 contains a key management facility 147. The key management facility (KMF) 147 controls the encryption processes used in the system, which is particularly important in the field of private mobile radio systems that provide communication to the Public service organisations such as the Police, Ambulance, Fire brigade.

In accordance with the preferred embodiment of the present invention, one or more BTSs (say, BTS 122) have been adapted to store encrypted protocol data unit (PDU) messages or fragments in storage element 123.
The stored encrypted PDU messages or fragments are then sent to a served MS (say MS 112). The stored encrypted PDU messages or fragments preferably include one or more associated parameters to assist in the decryption process, for example Slot Number, Frame Number, Multiframe Number, Hyper-frame Number, Colour Code, Carrier Number and Location Area. In this manner, the BTS 122 has been adapted to store encrypted PDU messages or fragments, rather than the encrypted PDU messages or fragments being automatically deleted, until such time as the BTS 112 is able to acquire the corresponding key to decrypt them.

Additionally, the one or more BTS 122 has preferably been adapted to include a key retrieval function 125, for example in the form of software code in a processor, to retrieve individual cipher keys from a cipher key repository (CKR) located in the CNE. In this manner, the BTS 122 has been adapted to retrieve corresponding key information from the CNE.

In the preferred embodiment of the present invention, the one or more BTS 122 has been further adapted to include a post-processing decryption function 127. The post-processing decryption function 127 enables the one or more BTS 122 to subsequently decrypt encrypted messages or message fragments to identify the intended purpose/addressee of the PDU message and re-construct the encrypted message.

Furthermore, in accordance with the preferred embodiment of the present invention, a device (or function) in the Central Networking Equipment, for example one or more MSCs 142, 144 has been adapted to include, or be operably coupled to, a Centralised Key Repository (CKR) 155. In a preferred implementation, the CKR 155 is integrated with the Home Location Register (not shown) associated with the MS 112. In an alternative embodiment, it is envisaged that the CKR may reside within a dedicated Key Management Facility (KMF) or Authentication Centre (AuC) device (153), as shown in relation to MSC 146.

Typically, the SwMI (i.e. the OMC 146) will indicate to the MS 112 whether or not individual cipher key retrieval is supported. This will allow the MS to determine if encrypted registration should be attempted during instances where prior indication of the cell selection had not be made available to the SwMI. When applied to a TETRA system, an example of this indication is the 'DCK retrieval during initial cell selection'. A further example would be a 'DCK retrieval during cell re-selection' indication. These indications provided in TETRA merely aid the MS to determine whether or not encrypted registrations (without prior indication) should be attempted for various cell selection procedures. Notably, the TETRA standard does not dictate the mechanisms by which a SwMI may in fact support such operations within its internal demise.

However, it is envisaged that for certain types of system, this functionality may be considered implicit and, as such, no indication may be necessary. When an MS detects (or, for example, based on prior knowledge) that the SwMI possesses the required key retrieval functionality, the MS 112 may then utilise any of the described protocol mechanisms or perform any of a number registration processes with encryption applied in any of the communication cells supported by the SwMI, e.g. power-on registration, roaming registration, periodic registration, etc.

The MS 112 may also consider that only initial cell selection and cell re-selection procedures need apply, i.e. the same set of procedures for selecting a cell and performing cell re-selection to another cell, say on a system that does not support encryption. Advantageously, no dedicated signalling (for the specific use of forwarding individual keys to the new cell), above and beyond existing initial cell selection and cell re-selection signalling, is necessary for the MS 112 to perform encrypted registrations on the new cell.

Additional dedicated signalling may lead to further delays during cell re-selection, which in mission critical public safety systems may be intolerable due to sustained breaks in audio. In TETRA, the use of an uplink protocol data unit, named a U-OTAR NEWCELL message, should be considered as additional dedicated signalling. Systems that operate without this dedicated signalling overhead will offer optimal cell re-selection performance.

The concept of 'Initial Cell Selection' process describes the methods by which the MS 112 selects an initial cell associated with a given system. The concept of 'Cell Re-selection' describes the methods by which the MS 112 may select another cell adjacent to the serving cell whilst belonging to the same system.

When considering the above general concepts in relation to TETRA, the process of 'initial cell selection' consists of the mechanisms of:
(a) Cell acquisition (gathering of system synchronisation (SYNC) and network information (SYSINFO)), and
(b) Performing power-on registration on the chosen cell using U-LOCATION UPDATE DEMAND.

Likewise, the process of 'cell re-selection' describes the mechanisms of:
(i) Determining neighbouring cells (if present) and their capabilities,
(ii) Selecting a cell which is appropriate to the service level required by the MS,
(iii) Indicating the intent of the MS to leave the serving cell (which in some circumstances may also include a new cell identifier) using U-PREPARE, and
(iv) Performing roaming registration on the new cell using U-LOCATION UPDATE DEMAND. In instances of 'forward registration', the U-LOCATION UPDATE DEMAND may be embedded with the U-PREPARE.

Thus, in accordance with the preferred embodiment of the present invention, when an MS 112 performs encrypted registration, the associated BTS 122 will receive an encrypted PDU that may have been fragmented across a number of timeslots and/or frames when transferred over the air-interface. Advantageously, the BTS 122 stores these PDU fragments, despite not being able to decrypt them due to the required individual cipher key being absent.

Preferably, upon reception of the first PDU fragment, the BTS 122 requests the associated individual cipher key required to decrypt the PDU from the CKR 155. As further encrypted fragments are received from the MS 112, the BTS 122 stores these further PDU fragments, preferably together with any other parameters related to the encryption/decryption process (e.g. slot number, frame number, multi-frame number, hyper-frame number, colour code, location area and carrier number) that are required to decrypt these fragments at some later time.

When the BTS 122 receives a response from the CKR 155 containing the individual cipher key, the BTS 122 performs decryption of the fragmented parts of the PDU in post-processing function 127. The post-processing function 127 preferably uses any other encryption related parameters associated with the PDU fragments. Once decryption of all the PDU fragments has concluded, the BTS 122 preferably reconstructs the original registration PDU message sent by the MS 112, which may then be processed in accordance with any existing implementation.

More generally, according to the preferred embodiment of the present invention, the storage element 123 and/or key retrieval function 125 and/or post-processing decryption function 127 and/or CKR 155 may be implemented in a respective communication unit in any suitable manner. For example, new apparatus may be added to a conventional communication unit (for example BTS 122 or MSC 142), or alternatively existing parts of a conventional communication unit may be adapted, for example by reprogramming one or more processors therein. As such the required adaptation may be implemented in the form of processor-implementable instructions stored on a storage medium, such as a floppy disk, hard disk, programmable read only memory (PROM), random access memory (RAM) or any combination of these or other storage media.

Although the invention is described in relation to TETRA as a digital communications technology, the principles of this invention may be applied to any other digital communication system that employs air-interface encryption. In particular, the inventive concepts are advantageous when implemented in communication systems that support encrypted registration signalling in order to prevent exposure of clear identity and signalling information.

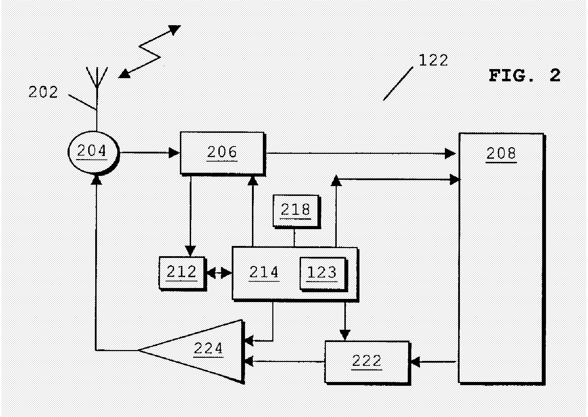

Referring now to FIG. 2, a block diagram of a base transceiver station (BTS) 122 adapted to support the inventive concepts of the preferred embodiments of the present invention is shown. As known in the art, the BTS 122 contains an antenna 202 preferably coupled to a duplex filter or antenna switch 204 that provides isolation between receive and transmit chains within BTS 122. The receiver chain includes receiver front-end circuitry 206 (effectively providing reception, filtering and intermediate or base-band frequency conversion). The front-end circuit 206 receives signal transmissions from supported MS. The front-end circuit 206 is serially coupled to a signal processing function (processor, generally realised by a digital signal processor (DSP)) 208.

In accordance with a preferred embodiment of the invention, the signal processing function 208 has been adapted to perform the aforementioned key retrieval function, to retrieve individual cipher keys from a CKR, and a post-processing decryption function, to later decrypt stored PDU fragments once a corresponding cipher key has been retrieved.

A controller 214 is operably coupled to the front-end circuitry 206 so that the receiver is able to calculate receive bit-error-rate (BER) or frame-error-rate (FER) or similar link-quality measurement data from recovered information via a received signal strength indication (RSSI) 212 function. The RSSI 212 function is operably coupled to the front-end circuit 206, so that an MS's received signal strength can be ascertained and hand-over/cell re-selection procedures initiated. A timer 218 is operably coupled to the controller 214 to control the timing of operations, namely the transmission or reception of time-dependent signals, within the BTS 122.

A memory element 123 stores a wide array of radio-specific data, such as decoding/encoding functions and the like, as well as link quality measurement information to enable an optimal communication link to be selected. In accordance with the preferred embodiment of the present invention, the memory element 123 has also been adapted to additionally store an MS's encrypted registration PDU fragments.

As regards the transmit chain, this essentially includes a processor 208 operably coupled to transmitter/modulation circuitry 222 and a power amplifier 224. The processor 208, transmitter/modulation circuitry 222 and the power amplifier 224 are operationally responsive to the controller, with an output from the power amplifier coupled to the duplex filter or antenna switch 204, as known in the art.

The processor 208 identifies an encrypted registration PDU from an MS whose DCK is unknown. In response to such a PDU, the processor 208 in the transmit chain in BTS 122 has been adapted to transmit a request for a corresponding cipher key from a CKR within the CNE.
The stored PDU fragments are retrieved from memory element 123 and forwarded through the infrastructure or sent to an MS.

It is envisaged that the signal processor function in the transmit chain may be implemented as distinct from the signal processing function in the receive chain. Alternatively, a single processor may be used to implement processing of both transmit and receive signals, as shown in FIG. 2. Of course, the various components within the BTS 122 can be realised in discrete or integrated component form, with an ultimate structure therefore being selected merely according to general design/implementation constraints.

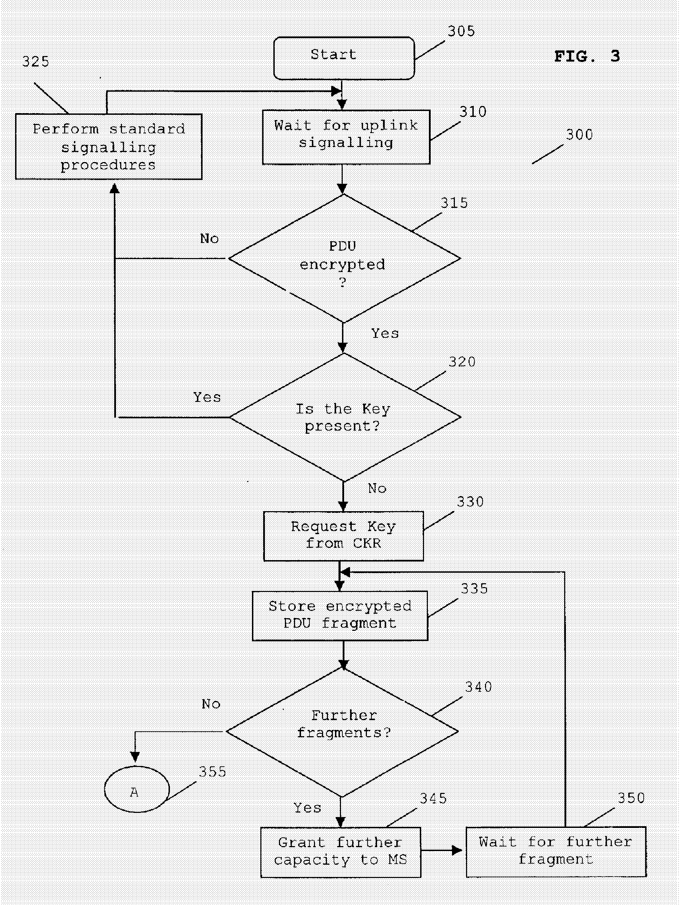

Referring now to FIG. 3, the preferred embodiment of the present invention is described by way of an example flowchart 300. The process commences in step 305 and initially follows the known method of dealing with encrypted PDU fragments. In this regard, a BTS waits for an uplink signalling protocol data unit (PDU) from the MS in step 310. Upon receipt of an uplink signalling PDU from a served MS, the BTS determines whether the PDU is encrypted, in step 315. If the PDU is not encrypted, in step 315, the BTS performs its standard signalling procedures, as shown in step 325. If the PDU is encrypted, in step 315, the BTS determines whether a corresponding cipher key is present in the PDU, as shown in step 320. In accordance with known procedures, if the encrypted PDU contains a corresponding cipher key, the BTS follows the standard signalling procedures, as shown in step 325.

However, in accordance with a preferred embodiment of the present invention, if the encrypted PDU does not contain a corresponding cipher key in step 320, the BTS requests the key from the centralised key repository (CKR) in the central network equipment (CNE), as shown in step 330. Notably, the BTS also stores the encrypted PDU fragment in step 335 and determines whether further PDU fragments exist, indicated by the fragmentation indication provided by the MS and its request for further uplink capacity, in step 340.

If further PDU fragments exist, in step 340, the BTS grants further capacity to the MS to send additional encrypted PDUs, as shown in step 345. The BTS then waits to receive the additional encrypted PDUs, as shown in step 350, and the process loops back to step 335.

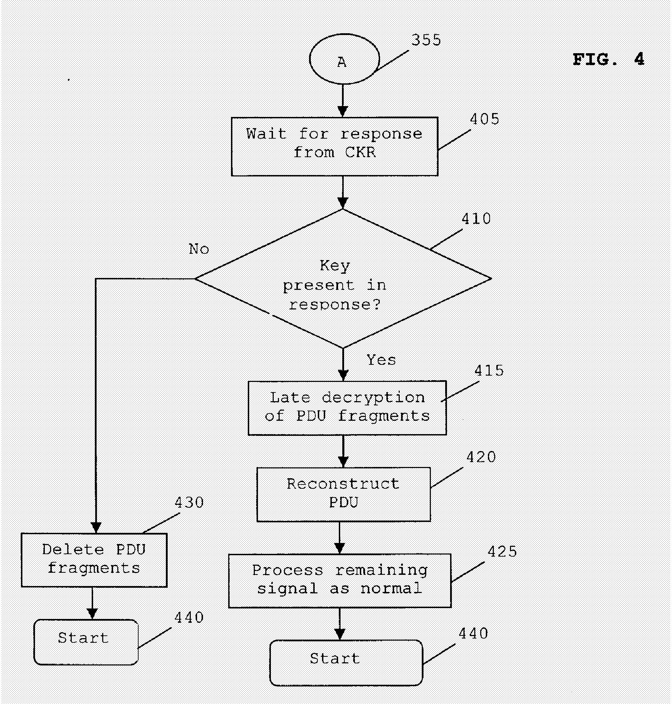

Referring now to FIG. 4, the flowchart continues from FIG. 3 in dealing with further PDU fragments. In this regard, the BTS waits for a response from the CKR, as shown in step 405. When a response is received from the CKR, the BTS determines whether the response contained the corresponding key to decrypt the PDU fragments received from the MS, as shown in step 410.

If the response from the CKR does contain the corresponding key, in step 410, the BTS is able to decrypt the stored PDU fragments, as shown in step 415. The BTS then reconstructs the PDU from the decrypted fragments, in step 420, and forwards the reconstructed PDU in the standard signalling process, as shown in step 425.

If the response from the CKR does not contain the corresponding key, in step 410, the BTS preferably follows the known (and last resort) technique of deleting the PDU fragments, as shown in step 430.

Although the preferred embodiment of the present invention has been described with reference to encryption messages used in a registration process, it is envisaged that the inventive concepts can be equally applied to other encrypted communications. For example, it is envisaged that some wireless communication systems may support multiple cells within a registration area. In such a scenario, a subscriber unit may register once by entering the area and transmitting an encrypted registration message to a first serving BTS in a first cell. Subsequently, the subscriber unit may enter a second cell, supported by a second BTS within the same registration area. In this case, the subscriber unit would attempt to make a call by transmitting an encrypted 'call set-up' message, instead of an encrypted registration message. The second BTS may not have been provided with the cipher key for this subscriber unit and would therefore store the encrypted call set-up message and attempt to retrieve a corresponding cipher key from the cipher key repository. Thus, a skilled artisan would appreciate that the inventive concepts hereinbefore described are not limited to registration messages, but can be applied to any other encrypted messages where a serving BTS may not have been provided with a corresponding cipher key.

Although the preferred embodiment of the present invention has been described with reference to a TETRA system, it is envisaged that the inventive concepts can be equally applied to any wireless communication system that employs AI encryption.

It will be understood that the communication system, communication units and method for performing encrypted communication, as described above, provide at least one or more of the following advantages:
(i) It allows a wireless communication system to support encrypted registrations, for example power-on, periodic or roaming registration, particularly where no prior indication of an MS's future location is provided to support a new registration;
(ii) It significantly improves system reliability during encrypted 'roaming' registrations, since it no longer requires the MS to identify a new cell that it will be moving to via its current serving cell. In this regard, the process alleviates the known problems associated with radio link failure or rapid mobility changes that often preclude an MS from providing such information; and
(iii) It reduces the overall complexity of key management of individual cipher keys, by only delivering individual cipher keys to the specific BTS that requires it. Thus, it requires much less signalling and management than a system that distributes the same key material to all BTSs.

Whilst specific, and preferred, implementations of the present invention are described above, it is clear that one skilled in the art could readily apply variations and modifications of such inventive concepts.

Thus, a method for performing encrypted communication, communication units and a communication system have been provided, that alleviate at least some of the aforementioned problems associated with prior art arrangements.

## Claims

1. A method (300) for performing encrypted communication in a wireless communication system having a centralised network operably coupled to a serving communication unit that wirelessly communicates with a plurality of remote communication units, the method comprising the step of:
transmitting an encrypted message or encrypted message fragments, from one of the plurality of remote communication units to the serving communication unit where the serving communication unit does not contain a key to decrypt the encrypted message or encrypted message fragments;
wherein the method is **characterised by** the steps of:
storing (335) the encrypted message or encrypted message fragments at the serving communication unit;
retrieving (330) , by the serving communication unit, a key from the centralised network; and
decrypting (415) the encrypted message or encrypted message fragments by the serving communication unit upon receipt of a key.

2. A method (300) for performing encrypted registration according to claim 1, wherein the encrypted message or encrypted message fragments forms an encrypted registration message.

3. A method according to claim 2 wherein the encrypted registration message corresponds to a power-on registration message, a roaming registration message or a periodic registration message.

4. A method (300) for performing encrypted communication according to Claim 1, Claim 2 or Claim 3, wherein the method further includes the subsequent step of:
reconstructing (420) the encrypted message or encrypted message fragments.

5. A method (300) for performing encrypted communication according to any one preceding Claim, the method further including the subsequent step of:
deleting (430) the stored encrypted message or encrypted message fragments when a corresponding key is not retrieved.

6. A storage medium storing processor-implementable instructions for controlling a processor to carry out the method of any one of Claims 1 to 5.

7. A communication system adapted to facilitate encrypted communication in accordance with the method according to any one of method Claims 1 to 5.

8. A communication system according to Claim 7, wherein the communication system is a communication system operable in accordance with TETRA standard procedures.

9. A wireless serving communication unit (122) adapted to facilitate encrypted communication in accordance with the method according to any one of Claims 1 to 5.

10. A wireless serving communication unit (122) according to claim 9 which comprises a receiver operably coupled to a storage element (123) and a processor (208), wherein the storage element (123) is operable to store an encrypted message or encrypted message fragments received from a wirelessly served communication unit (112) and the processor (208) retrieves a key from a remote device to enable subsequent decryption of the encrypted message or encrypted message fragments.

11. A wireless serving communication unit (122) according to Claim 10, wherein the encrypted message is an encrypted registration message or the encrypted message fragments are encrypted registration message fragments, for example, corresponding to a power-on registration message, a roaming registration message or a periodic registration message.

12. A wireless serving communication unit (122) according to Claim 10 or Claim 11, wherein the storage element also stores associated encryption parameters to facilitate subsequent decryption of the encrypted message or message fragments, for example one or more of the following parameters: slot number, frame number, multi-frame number, hyper-frame number, colour code, location area and carrier number.

13. A wireless serving communication unit (122) according to any one of preceding Claims 10 to 12,
wherein the processor (208) includes a post-processing decryption function (127) that is activated to process the stored encrypted messages or encrypted message fragments upon receipt of a cipher key retrieved from the remote device (155).

14. A wireless serving communication unit (122) according to Claim 13, wherein the post-processing decryption function (127) is operable to reconstruct the encrypted message or encrypted message fragments upon receipt of the cipher key.

15. A wireless serving communication unit (122) according to any one of preceding Claims 10 to 14, wherein the wireless serving communication unit (122) is a Base Transceiver Station capable of operation in a wireless communication system in accordance with TETRA standard procedures.

16. A communication system (100) having a network operably coupled to a serving communication unit (122-132) that wirelessly communicates with a plurality of remote communication units (112-116), wherein the network comprises a cipher key repository (155) operable to store a plurality of cipher keys to support encrypted communication in the communication system (100);
wherein the serving communication unit (122-132) is configured to store an encrypted message or encrypted message fragments received from one or more of the plurality of remote communication units when the serving communication unit (122-132) does not have a key to decrypt the message or message fragments and retrieve the key from the cipher key repository to facilitate subsequent decryption of the stored encrypted message or encrypted message fragments.

17. A communication system (100) according to Claim 16, wherein the encrypted message is an encrypted registration message or the encrypted message fragments are encrypted registration message fragments corresponding to a power-on registration message, a roaming registration message or a periodic registration message

18. A communication system (100) according to Claim 16 or Claim 17, wherein the serving communication unit (122-132) is configured to decrypt and reconstruct the encrypted message or encrypted message fragments into a previous format as received by the remote communication unit (112-116).

19. A communication system (100) according to any one of preceding Claims 16 to 18, wherein the serving communication unit (122-132) is configured only to delete the stored encrypted message or encrypted message fragments when a corresponding key is not retrieved from the cipher key repository.

20. A communication system (100) according to any one of preceding Claims 16 to 19, wherein the cipher key repository (155) is operably coupled to or integrated with a home location register of the network.

21. A communication system (100) according to any one of preceding Claims 16 to 20, wherein the communication system supports communications in accordance with TETRA standard procedures.
